(19) Europäisches Patentamt
European Patent Office
Office européen des brevets

(11) EP 0 866 449 A2

(12) EUROPEAN PATENT APPLICATION

(43) Date of publication:
23.09.1998 Bulletin 1998/39

(51) Int. Cl.⁶: **G11B 7/14**, G11B 7/09

(21) Application number: 98103622.1

(22) Date of filing: 02.03.1998

(84) Designated Contracting States:
AT BE CH DE DK ES FI FR GB GR IE IT LI LU MC NL PT
Designated Extension States:
AL LT LV MK RO SI

(30) Priority: 19.03.1997 JP 85942/97

(71) Applicant:
VICTOR COMPANY OF JAPAN, LTD.
Yokohama-Shi, Kanagawa-Ken (JP)

(72) Inventor: Itonaga, Makoto
Yokohama-shi, Kanagawa-ken (JP)

(74) Representative:
Wagner, Karl H., Dipl.-Ing. et al
WAGNER & GEYER
Patentanwälte
Gewürzmühlstrasse 5
80538 München (DE)

(54) **Optical disc apparatus**

(57) The present invention provides an optical disc apparatus for simultaneously producing information signals from a plurality of tracks formed concentrically or spirally on an optical disc by irradiating a laser beam over the plurality of tracks so as to extend in a radial direction of the optical disc and detecting a reflected light beam therefrom. The apparatus comprises an optimum focus point detection device for generating a focus offset compensation signal responsive to a detection of the reflected light beam, and a plural-division photo-detector for outputting a reproduction signal by receiving the reflected light beam, wherein the optimum focus point detection device outputs the focus offset compensation signal by using the output signal outputted from the plural-division photo-detector.

s0 : Reproduction Information Signal
s1 : Series Information Signal
s2 : Focus Offset Compen. Signal
s3 : Amplitude Signal
s4 : Focus Error Signal
s5 : Focus Driving Signal

*Fig. 1*

EP 0 866 449 A2

## Description

## BACKGROUND OF THE INVENTION

Field of the Invention:

The present invention relates to an optical disc apparatus, and particularly, relates to an optical disc apparatus capable of simultaneously reproducing recorded signals from a plurality of tracks formed on an optical disc with a best focus condition.

Description of the Related Art:

Presently, the optical disc apparatus capable of simultaneously reproducing recorded signals from a plurality of tracks formed on an optical disc is well known, as disclosed, for instance, in the Japanese Patent Laid-open Publication 8-249720/1997.

Specifically, the optical disc apparatus is provided with a wide area light irradiating source made of a laser array disposed to extend over the plural tracks so as to irradiate light beams on the plural tracks at the same time, photo-detecting means for detecting the light beams reflected by the plural tracks, and optical synthesizing means for synthesizing the detected light beams along a traversing direction to the plural tracks (in a radial direction of the optical disc).

Especially, the photo-detecting means is made of a plural of photo-detecting devices of which number is more than that of the plural tracks to be simultaneously reproduced (four or more times) to allow an optically reproduced image to have a sufficient resolution.

As such photo-detecting devices, not only one array sensor such as PD (photo diode), PIN-PD (PIN-photo diode) or CCD (charge coupled device) but also a two-demensional array sensor such as a TDI (Time Delay and Integration)/CCD sensor where the CCD is two-dimensionally disposed and the outputs therefrom undergo an integration treatment in a time axis direction, is available.

Focusing servo system used in the optical disc reproducing apparatus capable of simultaneously reproducing recorded signals from the plural tracks is the same as that of ordinary optical disc reproducing apparatus, wherein the light beam reflected form the optical disc is detected by using a plural-division type photo-detector (for instance, four-division type photo-detection device), and a focus error signal is calculated by using each output from each part of the plural-division type photo-detector. Thus, the positional control of an objective lens is performed responsive to the focus error signal.

Specifically, as well known, the focus error signal is generated from an photo-detecting section other than an information signal detecting section for detecting the information signals from the plural tracks. As another example, the focus error signal is generated by using detection signals generated from a plural-division type photo-detection device which is separately provided from the optical pickup system provided with the photo-detector for detecting the information signal as mentioned above.

According to the known optical disc apparatus capable of simultaneously reproducing the information signals from the plural tracks on the optical disc, there are problems as follows:

(1) When the information signals are reproduced from the optical disc having two or more recording layers (multi-recording layers) of the optical disc or,
(2) when an environmental temperature changes, an offset which is defined as a deviation of a focus driving point from a standard focus driving point in the focus error, is developed.
(1) Problems when the information signals are reproduced from the optical disc having the two or more recording layers.

The construction of the optical disc having two or more recording layers is as follows.

For instance, when the optical disc has two recording layers, first and second recording layers are formed at a thickness of 0.6 mm and a thickness of 1.2 mm from a bottom thereof, respectively, and the recording tracks for information signals are concentrically or spirally formed on each of the first and second recording layers.

The photo-detector (sensor) of the optical disc apparatus has a detecting width (detecting area) larger than that of the normal optical apparatus in which the photo-sensor receives a reflected light beam from only one track, so as to simultaneously receive the reflected light beams from the plural tracks. Thereby, the photo-detector receives in a superimposed state the two light beams being reflected from the first and second recording layers disposed close to each other.

Here, the sensor in the optical disc apparatus mentioned above has to have the larger detecting width. Thus, there is a problem that the offset is developed in the focus error signal because of the interference between the focus error signal related to the reflected light beams from the corresponding plural recording tracks to be reproduced and the focus error signal related to reflected light beams from the plural recording tracks not to be reproduced.

(2) Problem when the environmental temperature is changed.

This problem is developed when a length of optical path of an astigmatism optical system for giving an astigmatism to generate the focus error signal is largely different from a length of optical path of reproduction information signal detection optical system.

Specifically, in the ordinary optical disc apparatus mentioned above, the astigmatism optical system and the reproduction information signal detection optical system shares a common optical system, or both the systems are disposed close to each other. Here, the ordinary optical disc apparatus has an optical system as follows.

A laser beam emitted from a laser light source is irradiated on the recording track formed on the optical disc through a collimator lens, a semi-transparent mirror and an objective lens.

Thereby, the reflected light beam from the optical disc is again reflected by the semi-transparent mirror though the objective lens and impinges on the 4-division optical detector through the collecting lens. Here, a detection of the focus error is performed. Here, the collimator lens is generally used in common as a collecting lens, and the semi-transparent mirror may be disposed between the laser light source and the collimator lens. As a result, a focal length of the collimator lens is equal to a focal length of the collecting lens to the 4-division sensor, or the difference between their focal lengths, if any, is small.

On the other hand, in the optical disc apparatus capable of simultaneously reproducing the information signals from the plural recording tracks, the focal length of the collimator lens is greatly different from that of the imaging lens for collecting a light beam reflected by a semi-transparent mirror which is disposed along an optical path defined between the collimator lens to the objective lens, to the reproduction information signal detection sensor, as mentioned hereinafter.

Specifically, the optical system thereof is constructed as follows.

The light beam emitted from the laser light source is irradiated on the tracks formed on the optical disc through the collimator lens, the semi-transparent mirror and the objective lens. Thereby, the light beam reflected from the optical disc is reflected by the semi-transparent mirror through the objective lens, and the light beam is separated into two light beams by another semi-transparent mirror through the imaging lens (collecting lens), i.e., a light beam impinging on the astigmatism optical system and another light beam impinging on the reproduction information signal detection optical system.

More specifically, the focal length (fc) of the collimator lens is determined by an expansion of the light beam on the optical disc and an optical coupling efficiency from the laser light source to the objective lens, and is 2 to 5 times as long as the focal length (fo) of the objective lens. On the contrary, the focal length of the imaging lens (fi) is 30 to 50 times as long as that of the objective lens to allow minute pits to be projected on the photodetector having an area larger than that of the pits.

Lateral magnification of the optical system for giving astigmatism in the optical disc apparatus is:

$$m1 = fc/fo \qquad (1)$$

Lateral magnification of the reproduction information signal detection optical system is:

$$m2 = fi/fo \qquad (2)$$

When an environmental temperature changes, the length of each of sections forming the optical disc device linearly changes. At that time, in the reproduction information signal detecting optical system, the optimum focus point capable of obtaining the maximum output level of the reproduction information signal is deviated from a state where the environmental temperature is not changed.

On the other hand, when noting each sensor in the astigmatism optical system and the reproduction information signal detecting optical system, there is a just focus position on the optical disc to allow each sensor to output the maximum output level. It is desirable that the focus point after the change of the environmental temperature accords with the just focus position thereof, however, it does not accord therewith because of following reasons.

Specifically, change values in length from the respective sensors to the respective optimum focus points before and after the change of environmental temperature in the astigmatism and reproduction information signal detecting optical systems depend on longitudinal magnification.

Thus, each of the change values thereof varies in proportion to square of the lateral magnification $m1$, $m2$.

Further, the change values thereof vary in proportion to the focal length of the collimator lens (fc) and that of imaging lens (fi), respectively. Thus, when the lateral magnification $m1$ is not equal to the lateral magnification $m2$, it is not always possible to obtain the optimum focus point in the reproducing information signal detection optical system even when the optimum focus point in the 4-division sensor of the astigmatism optical system is obtained.

Accordingly, when detecting the focus point by the astigmatism method, the optimum focus point in the astigmatism optical system does not accord with the optimum focus point in the reproduction information signal detection optical system, resulting in a focus error (focus offset) between both sensors.

In the optical disc apparatus in the prior art, as the difference between the lateral magnifications $m1$ and $m2$ is small, a large focus error is not generated. However, in the the optical disc apparatus wherein the astigmatism optical system and the reproduction information signal detection optical system are placed apart from each other, there is generated a large focus error between both sensors by the change of environmental temperature because of the large difference between the lateral magnifications $m1$ and $m2$.

Further, generally, the focus operation point is optimized so that the output of the reproduction information signal becomes maximum. However, in parallel reproduction method, the positions of the tracks on the disc do not correspond completely to positions of respective plural cells forming the photo-sensor in the reproduction information signal detection optical system. In other words, they are not constructed in such a positional relation that each cell receives a reflected light beam from one track. Thus, the reproduction information signal reproduced from each sensor always contains some off-track components. In other words, the reproduction information signal contains off-track information signals obtained by the reflected light from the off-track part other than the on-track information signal obtained by the reflected light from the corresponding track.

Accordingly, there is a problem that the off-track information signal contained in the reproduction information signal, i.e., off-track effect, interferes with the focus effect. Thus, it is impossible to optimize the focus operation point so as to obtain the maximum output level of the reproduction information signal.

## SUMMARY OF THE INVENTION

Accordingly, a general object of the present invention is to provide an optical disc apparatus, in which the above disadvantages have been eliminated.

A specific object of the present invention is to provide an optical disc apparatus for simultaneously reproducing information signals from a plurality of tracks formed concentrically or spirally on an optical disc by irradiating a laser beam over the plurality of tracks so as to extend in a radial direction of the optical disc and detecting a reflected light beam therefrom, the apparatus comprising: an optimum focus point detection means for generating a focus offset compensation signal responsive to a detection of the reflected light beam, and a plural-division photo-detector for outputting a reproduction signal by receiving the reflected light beam, wherein the optimum focus point detection means outputs the focus offset compensation signal by using the output signal outputted from the plural-division photo-detector.

An another and more specific object of the present invention is to provide an optical disc apparatus for simultaneously reproducing information signals from a plurality of tracks formed concentrically or spirally on an optical disc by irradiating a laser beam over the plurality of tracks so as to extend in a radial direction of the optical disc and detecting a reflected light beam therefrom, the apparatus comprising: focus control means for performing a focus control by using a focus driving point which is obtained responsive to the reflected light beam; and optimum focus point detection means for generating a focus offset compensation signal to change the focus driving point and outputting the focus offset compensation signal to the focus control means so as to obtain a maximum level of reproduction information signal, wherein the optimum focus point detection means comprises: a plural-division photo-detector for outputting a reproduction information signal in parallel by receiving the reflected light beam and; signal converting means for converting the reproduction information signal in parallel to a serial information signal to be outputted; signal generator means for generating an amplitude signal having a predetermined amplitude to be superimposed with the focus driving signal, and an optimum focus driving point detecting circuit for outputting the focus offset compensation signal by detecting an offset level to be compensated through an amplitude of the focus driving signal superimposed with the amplitude signal so as to obtain a maximum modulation of the serial information signal.

Other objects and further features of the present invention will be apparent from the following detailed description.

## BRIEF DESCRIPTION OF THE DRAWINGS

Fig. 1 is a schematic view for explaining a construction of the optical disc apparatus of the present invention;
Fig. 2 is a schematic view for explaining an operation of a plural-division photo-detector and a parallel-input serial-output converting circuit;
Fig. 3 is a graph for explaining detected signal which is obtained by envelope-detecting the reproduction information signal output from the plural-division photo-detector;
Fig. 4 is a graph for explaining an operation of an optimum focus driving detecting circuit;
Fig. 5 is a graph for explaining an optimum focus point;
Fig. 6 is a schematic view for explaining a reproduction operation order when the reproduction is performed by using the optical disc apparatus of the present invention; and
Fig. 7 is a graph for explaining an operation for transferring the locus driving point to the optimum focus point by using a focus offset compensation signal.

## DETAILED DESCRIPTION OF THE PREFERRED EMBODIMENT

In the optical disc apparatus of the present invention, the optical disc apparatus generally comprises a reproduction information detection optical system and an astigmatism optical system.

In the reproduction information detection optical system, a plural-division photo-detector composed of plural photo-cells simultaneously receives in parallel plural reflected light beams out of the light spot which has been irradiated over the plural tracks formed concentrically or spirally on the optical disc so as to extend in a radial direction of the optical disc. Then, the reproduction information detection signals outputted in parallel from the plural cells of the plural-division photo-detector are converted into a serial information signal by being added in series. Then, an optimum focus point in the reproduction information detection optical system is determined by using the maximum output level of the serial information signal.

Specifically, a focus offset voltage (focus offset compensation signal) is produced so as to eliminate the focus offset defined as a deviation of the optimum focus point of the astigmatism optical system (focus detection optical system) from the optimum focus point where the output level of the serial information signal is maximum. This offset voltage is supplied to the astigmatism optical system to allow the focus error signal of the astigmatism optical system itself to control the optimum focus point of the reproduction information detection optical system by being superimposed to the focus error signal thereof. Thus, the reproduction information signal in parallel i.e., an optical image, can be always reproduced at the optimum focus point in the present invention.

Thereby, for instance, upon reproducing the signal from the optical disc having double recording layers, it is possible to securely eliminate the influence of unnecessary optical interference from the off tracks. This enables to provide the optical disc capable of reproducing the signals from the plural tracks at the optical focus point irrespective of the environmental change and irrespective of the optical disc having the double recording layers or the sole recording layer.

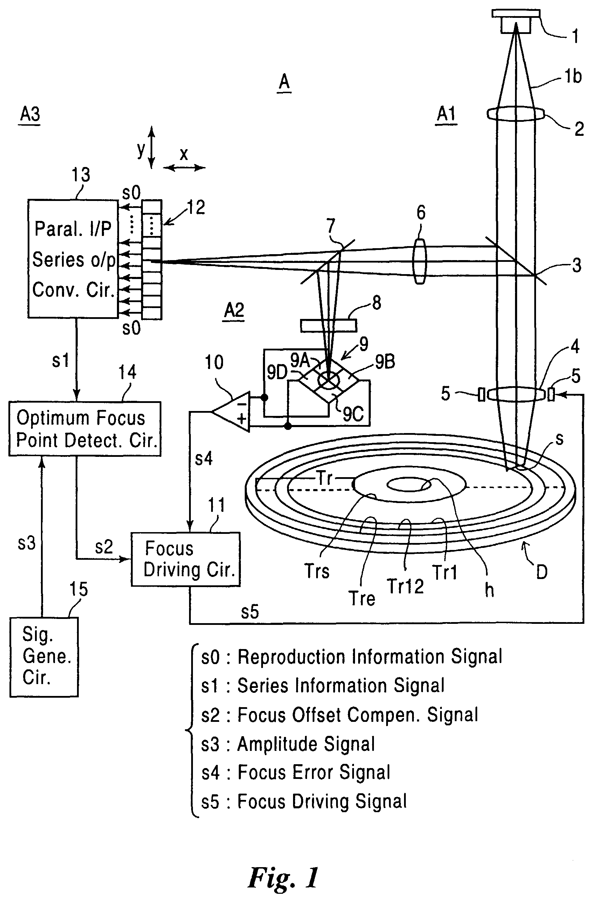

Next, the description is given of the optical disc apparatus of the present invention referred to Figs. 1 to 7.

Fig. 1 is a schematic view for explaining a construction of the optical disc apparatus of the present invention;

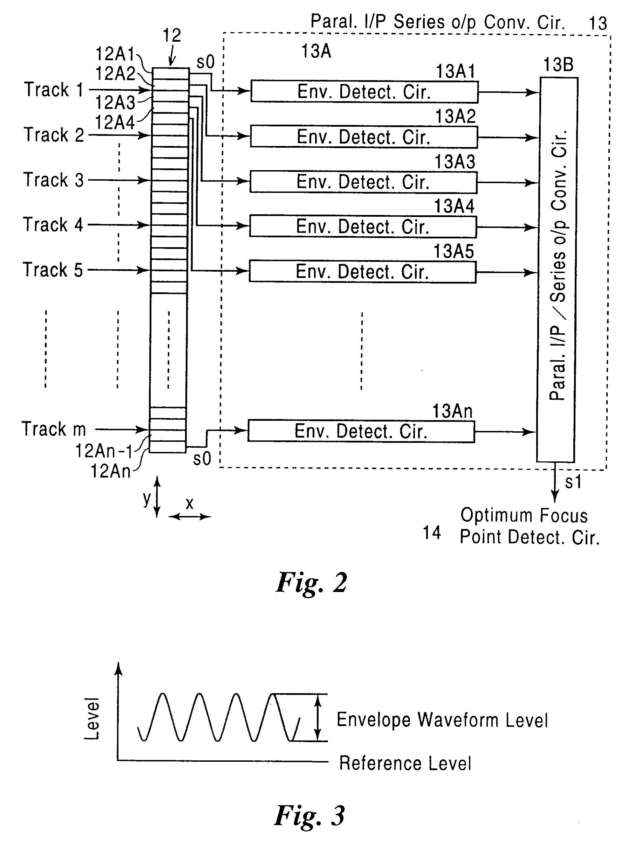

Fig. 2 is a schematic view for explaining an operation of a plural-division photo-detector and a parallel-input serial-output converting circuit;
Fig. 3 is a graph for explaining detected signal which is obtained by envelope-detecting the reproduction information signal output from the plural-division photo-detector;

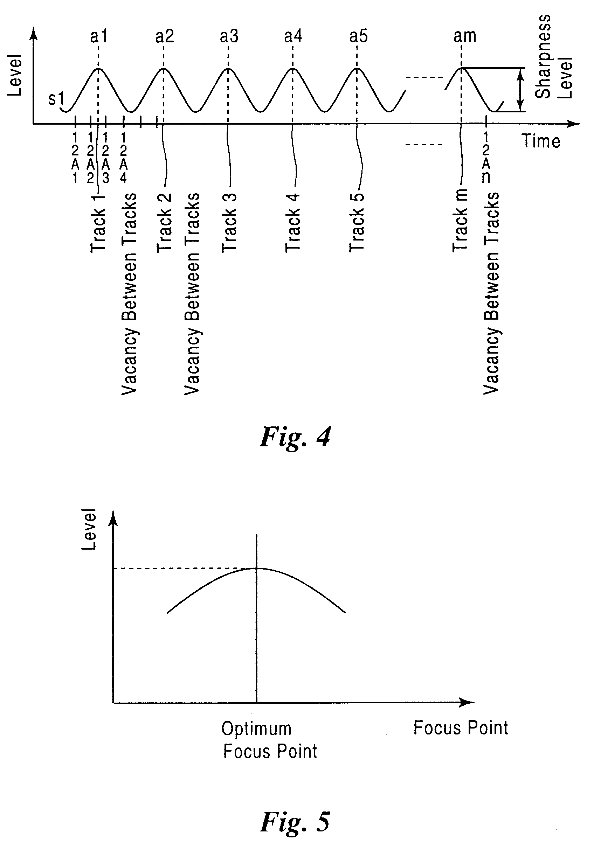

Fig. 4 is a graph for explaining an operation of an optimum focus driving detecting circuit;
Fig. 5 is a graph for explaining an optimum focus point;

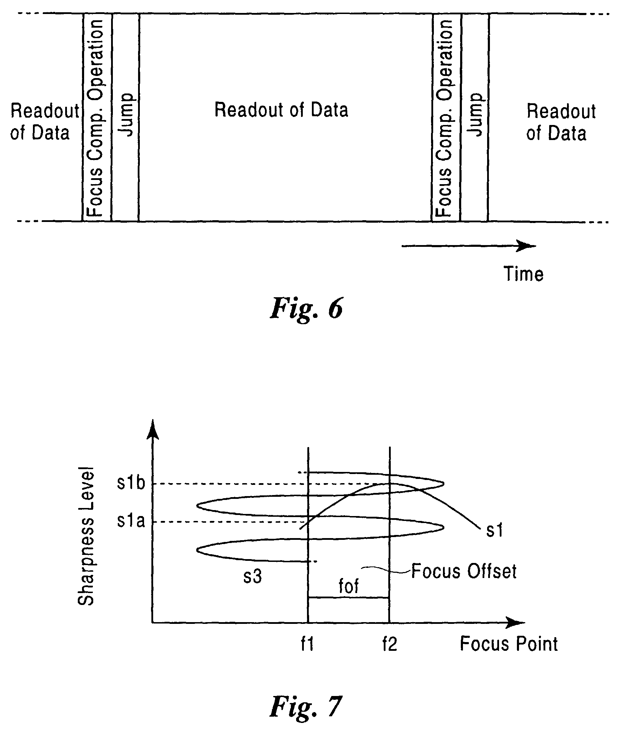

Fig. 6 is a schematic view for explaining a reproduction operation order when the reproduction is performed by using the optical disc apparatus of the present invention; and
Fig. 7 is a graph for explaining an operation for transferring the focus driving point to the optimum focus point by using a focus offset compensation signal.

The optical disc apparatus of the present invention is explained in the following order.

## (1) Construction of the optical disc apparatus A of the present invention.

(1-1) Construction and an operation of an irradiation optical system A1
(1-2) Construction and an operation of a focus detection optical system A2
(1-3) Construction and an operation of an optical image reproduction optical system A3

## (2) Operation of the optical disc apparatus of the present invention

## (1) Construction of the optical disc apparatus A of the present invention

As shown in Fig. 1, the optical disc apparatus A of the present invention comprises an irradiation optical system A1, a focus detection optical system A2 as an astigmatism optical system and an optical image reproduction optical system A3 as the reproduction information signal detecting optical system.

In Fig. 1, a reference character D denotes an optical disc, Tr tracks (all the tracks Trs to Tre from an inmost track to an outmost track), Trs the inmost track formed concentrically or spirally at an inmost circumference on the optical disc D, Tre the outmost formed concentrically or spirally at an outmost circumference on the optical disc D, Tr1 to Tr12 plural tracks from which information signals are being reproduced, and h a center hole.

As a matter of convenience, the description is given of the optical disc D having a sole recording layer at a depth of 0.6 mm or 1.2 mm therein on which plural tracks are concentrically or spirally formed.

Another example, it is possible to employ the optical disc D having double recording layers at a depth of 0.6 mm and a depth of 1.2 mm therein, respectively. In this case, it is also possible to obtain such an optical image that an image obtained based on the reflected light from a series of bits of each track and an image obtained based on the reflected light from vacancy (land) between the tracks are successively disposed in parallel in the optimum focus condition by controlling the focus of the light beam irradiated at one recording layer to be reproduced so as to obtain the reproduction optical image (reproduction information signal) in the optimum focus condition, as well as in the case of the optical disc having the sole recording layer.

(1-1) Construction and an operation of an irradiation optical system A1

The irradiation optical system A1 is composed of a surface illuminant 1, a collimator lens 2, a semi-transparent mirror 3, an objective lens 4 and a focus actuator 5.

The surface illuminant 1 is not one for irradiating a laser beam of a single transverse mode but one for irradiating a laser beam having an emitting width of approximately 50 to 100 μm. The surface illuminant 1 may be, for instance, a width stripe type laser diode (LD) or a point source LD which is made a surface illuminant using a multi-mode fiber. The collimator lens 2, the semi-transparent mirror 3, the objective lens 4 and the focus actuator 5 used are well known.

The laser beam 1b irradiated from the surface illuminant 1 is made to be parallel to the optical axis by the collimator lens 2 and passes through the semi-transparent mirror 3. Then, the laser beam 1b is simultaneously irradiated on the plural tracks Tr1 to Tr12 from which the image is to be reproduced, through the objective lens 4 as a light spot s. The light spot s is irradiated over the twelve tracks Tr1 to Tr12 extending in a radial direction.

Exemplarily, when the track width and track pitch of the tracks are 0.3 μm and 0.74 μm, respectively, the light spot are formed approximately at a width of 9 μm in the radial direction, respectively.

The simultaneously reflected light beam of the light spot s from a series of pits of the tracks and guard bands (land) between the twelve tracks Tr1 to Tr12 formed on the optical disc D is reflected by the semi-transparent mirror 3 through the objective lens 4 and impinges on a condenser lens 6. After passing through the condenser lens 6, the light beam is separated into two light beams by the semi-transparent mirror 7. One of the reflected light beams impinges on the focus detection optical system A2 and the other impinges on the optical image reproduction optical system A3, respectively.

#### (1-2) Construction and an operation of a focus detection optical system A2

The focus detection optical system A2 is composed of a cylindrical lens 8, a 4-division photo-detector 9, a comparator 10 and a focus driving circuit 11.

Here, the description is given of the case where as the focus detection optical system A2, the astigmatism is used, and as the focus detection optical system A2, the 4-division photo-detector is employed, however, it is possible to employ another plural-division photo-detector such as a 2-division detector or a 6-division photo-detector other than the 4-division photo-detector.

One reflected light beam of the two light beams separated by the semi-transparent mirror 7 impinges on the 4-division photo-detector 9 through the cylindrical lens 8.

The 4-division photo-detector 9 is composed of four optical detecting sections 9A, 9B, 9C and 9D, wherein the photo-detecting sections 9A, 9B are disposed at symmetrical positions with respect to the photo-detecting sections 9C, 9D, respectively.

The comparator 10 outputs to the focus driving circuit 11 a comparative signal (phase differential signal) which is obtained by comparing a sum output from a set of optical detecting sections 9B, 9D with a sum output from another set of photo-detecting sections 9A, 9C.

Generally, in the focus servo system composed of the objective lens 4, the semi-transparent mirror 3, the condenser lens 6, the semi-transparent mirror 7, the cylindrical lens 8, the 4-division optical detector 9, the comparator 10, the focus driving circuit 11, the focus actuator 5 and the objective lens 4, the focus error signal s4 is not generated from the comparator 10 in a focal matching state (a focus driving point f1 as shown in Fig. 7).

The focus driving circuit 11 is supplied with both the focus error signal s4 outputted form the comparator 10 mentioned in the foregoing and a focus offset compensation signal s2 outputted from an optimum focus driving point detection circuit 14 which forms the optical image reproduction optical system A3 as mentioned hereinafter.

The focus offset compensation signal s2 is obtained from another focus servo system composed of the objective lens 4, the semi-transparent mirror 3, the condenser lens 6, the semi-transparent mirror 7, the optical image reproduction optical system A3 (a plural-division photo-detector 12, a parallel input serial-output converting circuit 13 and the optimum focus driving point detection circuit 14), the focus driving circuit 11, the focus actuator 5, and the objective lens 4.

As mentioned hereinafter, the optimum focus driving point detection circuit 14 detects the focus offset fof defined as a deviation of the focus driving point f1 in the focus matching point of the focus detection optical system A2 itself from the optimum focus point f2 for allowing the maximum output of a reproduction information signal s0, and generates the focus offset compensation signal s2 so that the focus offset fof is eliminated, i.e., so that the focus driving point f1 coincides with the optimum focus point f2.

Specifically, first, an amplitude signal s3 is applied to the focus driving circuit 11 of the focus detection optical system A2 from the optical image reproduction optical system A3. The focus driving circuit 11 outputs a focus driving signal s5 which is superimposed with the amplitude signal f3. Responsive to the output of the focus driving signal s5, the focus driving point f1 varies as well as the the focus point in the optical image reproduction optical system A3, resulting in the variation of level of the reproduction information signal s0. Accordingly, a serial information signal s1 obtained by converting the reproduction information signal s0 also varies. Thus, such variation depends on the amplitude level and the period of an amplitude signal s3. The optimum focus driving point detection circuit 14 always detects the level of the serial information signal s1 and compares the levels thereof with the maximum level of the serial information signal preliminarily set, and outputs the focus offset compensation signal s2 until the maximum output level of the series information signal s1 is detected.

The focus driving circuit 11 supplies the focus driving signal s5 to the focus actuator 5 of the irradiation optical system A1 mentioned in the foregoing, wherein the focus driving signal s5 is obtained by superimposing the focus offset compensation signal s2 inputted from the optical image reproduction optical system A3 to the focus error signal s4 of the focus detection optical system A2.

As a result, the focus actuator 5 can perform the control of the objective lens 4 (the control of focus position) responsive to the level of the focus driving signal s5 which is related to both the focus detection optical system A2 and the optical image reproduction optical system A3.

Here, the focus error signal s4 outputted from the comparator 10 of the focus detection optical system A2 is a focus position error signal for mainly controlling the objective lens 4, and has a wide band range.

Next, the description is given of the case where the circumferential temperature is changed even when both the focus detection optical system A2 and the optical image reproduction optical system A3 are thoroughly controlled.

As shown in Fig. 7, the focus driving point in the focus matching state in the focus detection optical system A2 is located at a position of f1. On the other hand, when the focus driving point is located at the position f1, the level (sharpness level) of the serial information signal s1 outputted from the parallel input serial-output converting circuit 13 of the optical image reproduction optical system A3 corresponds to a sharpness level s1a which does not show the maximum sharpness level s1b. In order to obtain the serial information signal s1 having the maximum sharpness level s1b, the focus driving point f1 has to be transferred to the optimum focus point f2 so as to coincide therewith. Thus, it is necessary to eliminate the focus offset fof defined as a deviation of the focus driving point f1 from the optimum focus point f2 .

The optimum focus driving point detection circuit 14 prevents the optimum focus point f2 from deviating to the focus driving point f1 by applying the focus offset compensation signal s2 to the focus driving circuit 11.

As a result, even when the focus offset compensation signal s2 is superimposed on the focus error signal s4, the focus driving signal s5 itself outputted from the focus driving circuit 11 is not adversely affected.

In other words, the focus driving signal s5 from the focus driving circuit 11 has both the focus error signal component capable of controlling the objective lens 4 at a real time and the focus matching point detection signal component capable of controlling the objective lens 4 responsive to the optical image in the focus matching state at a large period, and both the components have been detected in a good state in the focus detection optical system A2 and the optical image reproduction optical system A3.

(1-3) Construction and an operation of an optical image reproduction optical system A3

The optical image reproduction optical system A3 is composed of the condenser lens 6, the semi-transparent mirror 7, the plural-division photo-detector 12, the parallel-input serial-output converting circuit 13, the optimum focus driving point detection circuit 14 and a signal generating circuit 15.

The focus point and the setting position of the condenser lens 6 are determined so that the reflected light beam passing through the condenser lens 6 is collected on the light detection cells of the plural-division photo-detector 12. On the plural-division photo-detector 12 the reflected light beam passing through the semi-transparent mirror 7 is irradiated. The plural-division photo-detector 12 is composed of plural photo-detection cells disposed in a network state, and is made of, for instance, CCD (Charge Coupled Device). As another example of the plural-division photo-detector, it is possible to employ a plural-division photo-detector where the detection cells are disposed in a line.

Here, for simplicity, only one line of photo-detection cells is shown in Figs. 1 and 2 as the plural-division photo-detectors 12. Actually, such photo-detection cells are disposed in a row direction x and in a column direction y. The reproduction information signal s0 represents an output reproduced from one line of plural cells of the plural-division photo-detector 12. When the plural-division photo-detector is composed of plural lines of cells, the reproduction information signal s0 is an output processed responsive to the time while the light beam passes through the plural lines of cells.

The reflected light beam passing through the semi-transparent mirror 7 is simultaneously received in parallel by all the photo-detection cells of the plural-division photo-detector 12, and all the optical image in the range irradiated with the optical spot s (i.e., the optical image based on the reflected light beam from the pit rows forming the track on the optical disc D as well as the optical image based on the reflected light beam from the vacancy (land) between the tracks) is divided into plural segments of the optical image corresponding to one line of the photo-detection cells, and each signal outputted from each of the plural segments of the optical image is supplied in parallel to the parallel input serial-output converting circuit 13 as the optical detection signal (reproduction information signal) s0.

The reproduction information signal s0 is divided into two branches, one passing through the parallel input serial-output converting circuit 13 and the other not passing therethrough. The reproduction information signal s0 not passing through the circuit 13 is detected in parallel by a reproduction processing circuit (not shown), and is taken out as the reproduction information signal therefrom.

On the other hand, the reproduction information signal s0 passing therethrough is envelope-detected here, and the parallel input signals are converted to a serial output signal, and the serial output signal is supplied to the optimum focus driving point detection circuit 14 as the serial information signal s1, as mentioned hereinafter.

Further, as another constructive example of the plural-division photo-detector 12, it is possible to construct the plural-division photo-detector 12 so as to contain both first parallel cells for outputting in parallel the reproduction information signal s0 to the reproduction processing circuit (not shown) and second parallel-serial cells for directly outputting the serial information signal after converting the reproduction information signal s0 to the serial information signal therein. In this case, the parallel-input serial-output converting circuit 13 can be saved.

As shown in Fig. 2, the photo-detection cells 12A1 to 12An corresponding to one line of the plural-division photo-detector 12 receive the reflected light beams from a group of the tracks Tr1 - Trm (m = 12 in the embodiment), respectively. For instance, four photo-detection cells are used to receive the reflected light beam per one track pitch.

For instance, in the case of the light beam reflected from the track 1 (Tr1) in Fig. 2, it shows that the reflected light beam can be received by the four photo-detection cells 12A1 to 12A4. The photo-detection cells 12A1 to 12An output photo-detection signals (reproduction information signals) s0 of a line in parallel to the reproduction processing circuit (not shown) and to an envelope-detecting circuit 13A (13A1 to 13An) forming the subsequent parallel input serial-output converting circuit 13 as well.

In detail, as shown in Figs. 1 and 2, the detection range formed by a vertical line of the photo-detection cells aligned in the column direction y is made to be large enough to detect the light beam reflected from the plural tracks on which the light spot s having a predetermined width along a traversing direction to the tracks (in a radial direction of the optical disc D) are irradiated.

On the other hand, the detection range (column y x row x) formed by causing a plurality of the vertical lines of the photo-detection cells to be aligned in the row direction is made to be large enough to detect the light beam reflected from the plural tracks on which the light spot s having the predetermined width along a traversing direction to the tracks (in the radial direction of the optical disc D).

After the parallel input serial output converting circuit 13 envelope-detects the reproduction information signals s0 inputted in parallel from the plural-division photo-detector 12, the circuit 13 outputs the parallel envelope-detected signals to the optimum focus driving point detection circuit 14 as the serial information signal s1. The reproduction information signals s0 outputted from the plural-division photo-detector 12 have a wide bandwidth, however, the signal s0 is made to have a narrow bandwidth by the envelope-detection.

In detail, as shown in Fig. 2, the parallel input serial-output converting circuit 13 is composed of the envelope detecting circuit 13A (13A1-13An) for envelope-detecting the optically detected signal outputted in parallel from the one line of the photo-detection cells 12A1 to 12An of the plural-division photo-detector 12, and the parallel-input serial-output converting circuit 13B for converting the parallel envelope detection signals outputted from the envelope detecting circuit 13A to the serial detection signal.

Fig. 3 is a graph for explaining a waveform of the envelope detection signal outputted from each of the envelope detecting circuits 13A1 to 13An; and

Fig. 4 is a graph for explaining a waveform of the serial information signal s1 outputted from the parallel input series output converting circuit 13B.

As shown in Fig. 4, the level of the serial information signal s1 outputted from the parallel input serial-output converting circuit 13B corresponds to a respective level of the photo-detected signal (reproduction information signal) s0 detected by each of the photo-detection cells 12A1 to 12An corresponding to one line of the plural-division photo-detector 12. Namely, the photo-detected signal (reproduction information signal) s0 is changed responsive to the intensity of the reflected light beam from the range of the track 1 to the track m shown with arrows.

In Fig. 4, reference characters a1, a2, a3, a4, a5 · · · · · · , am respectively denote intensities of the reflected light beam (sharpness level) from the tracks 1 to 5 when pits formed on the tracks 1 to m are irradiated by the beam spot s. The intensity of the reflected light beam from the track on which the pits are formed, is stronger than that of the vacancy between the tracks.

The intensities of the reflected light beam are outputted in such a sampled state as shown with reference characters 12A1, 12A2, 12A3 · · · corresponding to respective photo-detection cells. The reflected light beams passing through LPF (low pass filter, not shown), i.e., the envelope detecting circuit 13A1 to 13An as mentioned hereinafter, becomes the serial information signal s1 having a sharpness level shown in Fig. 4.

As mentioned above, the parallel-input serial-output converting circuit 13 sequentially outputs the serial information signal s1 at every one line of photo-detection cells of the plural-division photo-detector 12.

The optical image reproduction optical system A3 is to compensate the focus offset caused by the focus detection optical system A2 for detecting the optimum driving point of the focus servo system mentioned above.

The optimum focus point in the optical image reproduction optical system A3 is found out by detecting the maximum level of the intensity (sharpness level) of the reflected optical image caused by the irradiation of the light spot s.

This method is possible to be employed because of simultaneously reproducing the signals from the plural tracks.

Next, the description is given of the operation of a new focus servo system including the optical image reproduction optical system A3.

The amplitude of the reproduction information signal s0 detected from the plural-division photo-detector 12 is detected (or sampled) by the envelope detecting circuit 13A.

And, the envelope detecting circuit 13A outputs in parallel the parallel envelope detection signal to the parallel-input serial-output converting circuit 13. And, the serial information signal s1 outputted from the parallel-input serial-output converting circuit 13 is outputted as a function with respect to a diameter direction of the optical disc D. The point where the amplitude of the series information signal s1 is maximum, is the best point of the focus (the focused point of the optical image), and this amplitude corresponds to the sharpness. The maximum level of the sharpness is the optimum focus point.

Fig. 5 is a graph showing that the optimum focus point corresponds to the case where the sharpness level (the level of the serial information signal s1) is maximum.

In the optimum focus driving point detection circuit 14, the peak point (maximum level) of the serial information signal s1 is found out by changing the operating point of the focus, and the compensation operation is performed by causing the focus offset compensation signal s2 to be inputted to the focus driving circuit 11 so that this point is made to be the operating point (the optimum focus point). If the compensation of the operating point, that is, the setting of level of the focus offset compensation signal s2, is needed only one time per one reproduction of the signal from the optical disc, the series of operations may be performed only one time.

Further, in the focus offset of the optical disc having the double recording layers, it is better to compensate in real time the change of operating point caused by the environmental change because the amount of change depends on the thickness between the double layers. For that purpose, the change of the sharpness of the optical image in the diameter direction of the optical disc is detected by periodically varying the operating point of the focus servo slightly. Thus, it is possible to perform the real time operation by generating the focus offset compensation signal by using the detected signal.

Specifically, the signal generating circuit 15 periodically, intermittently or continuously, outputs an amplitude signal having a predetermined amplitude and superimpose it to the focus offset compensation signal s2 outputted from the optimum focus driving point detectioncircuit 14.

Further, in order to compare the modulation degree of the serial information signal s1, the signal generating circuit 15 preliminarily provides the amplitude signal s3 to the optimum focus driving point detection circuit 14. The focus offset compensation signal s2 periodically, intermittently or continuously superimposed with the amplitude signal s3 gives fluctuation to the focus driving signal s5 outputted from the focus driving circuit 11 responsive to the minute fluctuation due to the amplitude signal s3.

Thus, the focus driving signal s5 varies in a minute level. As a result, a minute change of the focus is given to the focus servo system (the objective lens 4, the semi-transparent mirror 3, the condenser lens 6, the semi-transparent mirror 7 and the optical focus driving point detection circuit 14, the focus driving circuit 11, the focus actuator 5 and the objective lens 4).

By the effect of the minute change, the serial information signal s1 to be inputted to the optimum focus driving point detection circuit 14 varies in a minute level (i.e., the serial information signal s1 is modulated by the amplitude signal s3). The optimum focus driving point detection circuit 14 detects the serial information signal having the maximum modulation by comparing the amplitude signal s3 with the serial information signal s1 (the detection of the maximum sharpness level is performed by the detection of the peak).

Thereby, the optimum focus driving point detection circuit 14 can generate the focus offset compensation signal s2 capable of making the sharpness level maximum. This point is the optimum focus point as shown in Fig.5.

Accordingly, it is possible to perform desired compensation operation by controlling the focus offset at real time.

As another peak detection method, there is one where the peak point is detected by using a fact that when the amplitude signal is modulated at the optimum focus point shown in Fig. 5, the frequency of the modulated amplitude signal becomes two times as high as that of the amplitude signal. Thus, this change of frequency can be detected by using heterodyne detect, resulting in the detection of the optimum focus point.

Next, the description is given of another preferable constructive example.

Here, a number of tracks to be read out simultaneously is made to be larger at least by two than the necessary number of tracks which is determined by a transfer rate in the optical disc device. Upon reproducing the signal from optical disc having spiral tracks such as CD or DVD, a track jump is indispensable at one revolution of the optical disc optical disc D. Thus, it is convenient to employ the reproduction method where the tracks are always reproduced in an overlapping state because of ceaseless reproduction.

Here, when the focus change is intermittently or periodically given in synchronization with the track jump just before or just after the track jump, upon reading out the information data, it is possible to detect the information data without the fluctuation of the focus.

In other words, the information signals corresponding to 12 tracks are simultaneously reproduced by the optical disc apparatus A of the present invention, and among them, the information signals corresponding to 10 tracks are outputted as the reproduction signal. During the track jump period, as there arises a lack of the information, it is possible to obtain the continuous reproduction signal apparently by a construction capable of outputting the information corresponding to the remaining two tracks.

For the purpose, it is desirable to finish the minute change of the operation point of focus servo within a degree of a time that one revolution time of the optical disc D is divided by the number of tracks to be read out, or preferably within a degree of a time that the required time of the track jump is subtracted from the time mentioned above. Generally, the change of the focus offset is not abrupt one. Thus, it is enough to perform this operation one time per plural revolutions of the optical disc D not one time per a revolution thereof.

Fig. 6 shows a time chart of the operations when the operation of setting optimum level of the focus offset compensation signal s2 is performed one time per a revolution of the optical disc.

As shown in Fig. 6, in accordance with the lapse of time, a series of operations such as the read out of data, the focus compensation operation setting the optimum level of the signal s2 mentioned above, and the track jump of the optical pickup is repeatedly performed.

## (2) Operation of the optical disc apparatus A of the present invention.

The description is given of the operation of the optical disc apparatus A.

As shown in Fig. 1, the laser beam 1b emitted from the surface illuminant source 1 is made to be parallel by the collimator lens 2, and passes through the semi-transparent mirror 3, and forms the light spot s through the objective lens 4 on the optical disc D. The light spot s is irradiated over the twelve tracks Tr1 to Tr12 in the radial direction of the optical disc D.

The light beam simultaneously reflected from the pit rows of the twelve tracks Tr1 to Tr12 and the vacancy between the adjacent tracks passes through the objective lens 4 again and is reflected by the semi-transparent mirror 3, and is inputted to the condenser lens 6. After passing through the condenser lens 6, the light beam is separated into two branches by the semi-trasparent mirror 7. Here, one of the two light beams separated is inputted to the focus detection optical system A2 and the other of them is inputted to the optical image reproduction optical system A3.

The one of the two light beams separated by the semi-transparent mirror 7 is inputted to the 4-division photo-detector 9 through the cylindrical lens 8. The comparator 10 outputs a compensation signal to the focus driving circuit 11 as the focus error signal s4 obtained by comparing the output sum of a set of the photo-detection sections 9B, 9D and the sum of another set of the photo-detection sections 9A, 9C. The focus driving circuit 11 is supplied with the focus error signal s4 and the focus offset compensation signal s2 outputted from the optimum focus driving point detection circuit 14.

The focus driving circuit 11 supplies the focus driving signal s5 which is obtained by superimposing the focus error signal s4 from the one focus servo system and with the focus offset compensation signal s2 from the other focus servo system, to the focus actuator 5. It should be noted that the one focus servo system comprises the objective lens 4, the semi-transparent mirror 3, the condenser lens 6 the semi-transparent mirror 7, the cylindrical lens 8, the 4-division photo-detector 9, the comparator 10, the focus driving circuit 11, the focus actuator 5 and the objective lens 4, and another servo system comprises the objective lens 4, the semi-transparent mirror 3, the condenser lens 6, the semi-transparent mirror 7, the optical image reproduction optical system (the plural-division photo-detector 12, the parallel-input serial-output converting circuit 13, and the optimum focus driving point detection circuit 14), the focus driving circuit 11, the focus actuator 5 and the objective lens 4.

As the result, the focus actuator 5 can perform the control of the objective lens 4 responsive to the focus driving signal s5 related to both the focus detection optical system A2 and the optical image reproduction optical system A3.

The plural-division photo-detector 12 simultaneously receives in parallel another separated light beam passing through the semi-transparent mirror 7 by all its plural photo-cells, and divide all the optical image within the irradiated range of the light spot s (a total image of an image part based on the reflected light beam from the pit line of each track and another image part based on the reflected light beam from the vacancy between the tracks) into each image at each photo-detector cell line, and outputs it to the parallel-input serial-output converting circuit 13 as the reproduction information signal s0. The reproduction information signal s0 is separated into two branches. One of the two branches thereof s0 is inputted to the reproduction signal processing circuit (not shown), and the optical image is reproduced here.

The other of the two branches thereof s0 is supplied to the parallel-input serial-output converting circuit 13 to be envelope detected here. Then, it is inputted to the optimum focus driving point detection circuit 14 as the serial information signal s1.

The serial information signal s1 outputted from the parallel-input serial-output converting circuit 13B corresponds to the optical detection signals detected in one line of the photo-cells 12A1 to 12An.

While the optimum focus driving point detection circuit 14 superimposes the amplitude signal s3 to the focus offset compensation signal s2 and the superimposed signal is added to the focus error signal s4, the circuit 14 detects the optimum level of the focus offset compensation signal s2 at which the serial information signal s1 becomes maximum, and continues outputting the focus offset compensation signal 32 having the detected optimum level until next detection operation of the optimum focus driving point.

In other words, in the optimum focus driving point detection circuit 14, the peak point is detected by changing the focus operation point, and the offset voltage is applied to the focus driving circuit 11 so that the peak point is made to be the operation point of the focus servo. If the compensation of the operating point is needed to be detected only one time per one reproduction of the signal from the optical disc, the series of operations may be performed only one time.

As mentioned above, according to the present invention, it is possible to simultaneously reproduce the information signals from the plural tracks formed on the optical disc D in the optimum focus condition.

As another example, when the astigmatism in the astigmatism method is performed by using the same sensor employed for both the astigmatism detection (focus detection) and the signal detection, the occurrence of astigmatism is performed in the projection optical system because aberration has to be suppressed in the optical system from the objective lens from the sensor.

Specifically, it is possible to develop the astigmatism by disposing a cylindrical lens close to the collimator lens. In this case, it is possible to construct the plural-division photo-detector 12 and the 4-division photo-detector 9 on the same photo-detector by surface division.

According to the optical disc apparatus of the present invention, the apparatus is constructed so that the optical image is reproduced in the optimum focus condition by detecting the optimum focus point based on the intensity distribution of the reproduced optical image which is obtained being simultaneously reproduced from the plural tracks formed on the optical disc by using the plural-division photo-detector.

Thereby, it is possible to provide the optical disc apparatus capable of avoiding unnecessary interference light from the recording layer not to be reproduced irrespective of change of the environmental temperature, and always reproducing the signal from the tracks to be reproduced in the optimum focus condition by controlling the focus.

Needless to say, upon reproducing the signals from the optical disc having one recording layer, it is possible to provide the optical disc apparatus capable of avoiding unnecessary interference light irrespective of change of the environmental temperature, and always reproducing the signal from the tracks in the optimum focus condition by controlling the focus.

## Claims

1. An optical disc apparatus for simultaneously reproducing information signals from a plurality of tracks formed concentrically or spirally on an optical disc by irradiating a laser beam over the plurality of tracks so as to extend in a radial direction of the optical disc and detecting a reflected light beam therefrom, the apparatus comprising:

   an optimum focus point detection means for generating a focus offset compensation signal responsive to a detection of the reflected light beam, and
   a plural-division photo-detector for outputting a reproduction signal by receiving the reflected light beam, wherein the optimum focus point detection means outputs the focus offset compensation signal by using the output signal outputted from the plural-division photo-detector.

2. An optical disc apparatus for simultaneously reproducing information signals from a plurality of tracks formed concentrically or spirally on an optical disc by irradiating a laser beam over the plurality of tracks so as to extend in a radial direction of the optical disc and detecting a reflected light beam therefrom, the apparatus comprising:

   focus control means for performing a focus control by using a focus driving point which is obtained responsive to the reflected light beam; and
   optimum focus point detection means for generating a focus offset compensation signal to change the focus driving point and outputting the focus offset compensation signal to the focus control means so as to obtain a maximum level of reproduction information signal, wherein the optimum focus point detection means comprises:
   a plural-division photo-detector for outputting a reproduction information signal in parallel by receiving the reflected light beam and;
   signal converting means for converting the reproduction information signal in parallel to a serial information signal to be outputted;
   signal generator means for generating an amplitude signal having a predetermined amplitude to be superimposed with the focus driving signal, and
   an optimum focus driving point detecting circuit for outputting the focus offset compensation signal by detecting an offset level to be compensated through an amplitude of the focus driving signal superimposed with the amplitude signal so as to obtain a maximum modulation of the serial information signal.

3. The optical disc apparatus as claimed in claim 2, wherein the optimum focus driving point detecting circuit detects the offset level of the focus offset compensation signal by detecting a change of amplitude of the serial information signal when the focus driving point is intermittently changed by intermittently changing the focus driving signal, and continues outputting the focus offset compensation signal having the detected offset level.

4. The optical disc apparatus as claimed in claim 2, wherein a number of the plural tracks is made to be larger at least by two than a number of tracks to be readout which is determined by a transfer rate of the optical disc apparatus itself.

5. The optical disc apparatus as claimed in claim 3, wherein a number of the plural tracks is made to be larger at least by two than a number of tracks to be readout which is determined by a transfer rate of the optical disc apparatus itself.

*Fig. 1*

s0 : Reproduction Information Signal
s1 : Series Information Signal
s2 : Focus Offset Compen. Signal
s3 : Amplitude Signal
s4 : Focus Error Signal
s5 : Focus Driving Signal

Paral. I/P Series o/p Conv. Cir.   13

12

13A

12A1
12A2                                    13A1
Track 1                    s0    | Env. Detect. Cir. |
12A3
12A4                                    13A2
Track 2                          | Env. Detect. Cir. |

                                        13A3
Track 3                          | Env. Detect. Cir. |

                                        13A4
Track 4                          | Env. Detect. Cir. |

                                        13A5
Track 5                          | Env. Detect. Cir. |

                                        13An
Track m                          | Env. Detect. Cir. |
12An-1
12An        s0                                      s1

y
x                                      Optimum Focus
                                14   Point Detect. Cir.

13B

Paral. I/P / Series o/p Conv. Cir.

*Fig. 2*

Level

Envelope Waveform Level

Reference Level

*Fig. 3*

**Fig. 4**

**Fig. 5**

| Readout of Data | Focus Comp. Operation | Jump | Readout of Data | Focus Comp. Operation | Jump | Readout of Data |

Time

*Fig. 6*

*Fig. 7*